# EUROPÄISCHE PATENTSCHRIFT

(11) **EP 1 988 012 B1**
(45) Veröffentlichungstag und Bekanntmachung des Hinweises auf die Patenterteilung: **01.08.2012**
(21) Anmeldenummer: 08155629.2
(22) Anmeldetag: 05.05.2008
(51) Int. Cl.: B64C 3/18, B64C 3/20, B64C 3/38, B64C 3/52, B29C 70/20

(54) **Tragflügel für ein Luftfahrzeug mit einer in Faserverbundbauweise ausgebildeten tragenden Struktur**
Wing for an aircraft with a fiber composite load carrying structure
Aile d'un aéronef avec une structure porteuse en matériau composite renforcé de fibres

(30) Priorität: 04.05.2007 DE 102007020952
(43) Veröffentlichungstag der Anmeldung: 05.11.2008
(73) Patentinhaber: Deutsches Zentrum für Luft- und Raumfahrt e.V., 51147 Köln (DE)
(72) Erfinder: Dietz, Guido, 50678 Köln (DE); Schwochow, Jan, 37133 Friedland (DE); Abdalla, Mostafa, 2624 CW Delft (NL); De Breuker, Roeland, 2408 JG Alphen aan den Ryn (NL); Gürdal, Zafer, 2661 GX Delft (NL)
(74) Vertreter: Rehberg Hüppe + Partner

(56) Entgegenhaltungen:
- US-A- 3 930 626
- US-A- 5 269 657
- US-A1- 2003 062 647
- US-B1- 6 419 187

## Beschreibung

### TECHNISCHES GEBIET DER ERFINDUNG

Die Erfindung bezieht sich auf einen Tragflügel für ein Luftfahrzeug mit den Merkmalen des Oberbegriffs des Patentanspruchs 1.

### STAND DER TECHNIK

Die Tragflügel heutiger Verkehrsflugzeuge sind zumeist rückwärts gepfeilt und werden in Schalenbauweise als geschlossene Röhre ausgeführt. Noch werden vornehmlich metallische Werkstoffe für die Bereitstellung der tragenden Struktur von Tragflügeln verwendet. Die Anwendung der Faserverbundbauweise für die tragende Struktur von Tragflügeln, z. B. die Verwendung von anisotropen Kohlefaserverbundwerkstoffen, verspricht jedoch relevante Gewichtseinsparungen. So wird der überwiegende Teil der Primärstruktur der in Entwicklung befindlichen Boeing 787 einschließlich der Tragflügel voraussichtlich aus Faserverbundwerkstoffen gefertigt werden. Auch Airbus plant bei der Entwicklung der neuen A350XWB einen massiven Einsatz von Faserverbundwerkstoffen.

Aus der US 6,419,187 B1 ist ein dünnwandiges Profil mit Profilvariation unter Ausnutzung von Anisotropismus des Materials der Struktur bekannt. Dieses dünnwandige Profil kann als Tragflügel Verwendung finden. Die dünne Wand des Profils ist in Faserverbundbauweise ausgebildet. Der Materialanisotropismus ist lokal vorgesehen, um spezifische Änderungen der Kontur des Profils hervorzurufen. Die dabei zugrundeliegende Grundverformung der Kontur wird durch Aktuatoren hervorgerufen. Bei der Faserverbundbauweise können im Verbund mit Lagen aus unidirektionalen Fasern auch solche mit einer Ausrichtung von +/- 45° vorgesehen sein.

Die anisotropen, d. h. richtungsabhängigen mechanischen Eigenschaften von Faserverbundwerkstoffen werden bei den aktuellen Flugzeugentwicklungen gezielt ausgenutzt. Bei den gepfeilten Tragflügeln üblicher Verkehrsflugzeuge tordieren die Flügelspitzen unter Fluglast, d. h. bei Auftriebserzeugung, zu reduzierten Anstellwinkeln. Diese im Allgemeinen nachteilige aeroelastische Eigenschaft gepfeilter Tragflügel kann durch Faserverbundbauweise und Vorverwindung abgemildert werden. Der Faserverbund ist dabei so aufgebaut, dass er sich im Bereich der zulässigen Gesamtauftriebe nahezu linearelastisch verhält. D. h., dass seine Verformung einschließlich seiner Torsion nahezu linear von dem Gesamtauftrieb abhängt.

Die Auslegung der tragenden Struktur eines Tragflügels mit gerichteten Steifigkeiten, z. B. mit anisotropen Kohlefaserverbundwerkstoffen, so dass sich die umströmte Geometrie unter den Luftlasten für die Flugleistungen sowie Flugeigenschaften, wie beispielsweise die Steuerbarkeit, eines Luftfahrzeugs günstig verformt und im Bereich der auftretenden Gesamtauftriebe keine unzulässigen Materialbelastungen auftreten, wird allgemein als "Aeroelastic Tailoring" bezeichnet. So tordieren die Flügelspitzen gepfeilter Tragflügel üblicher Verkehrsflugzeuge unter Luftlast zu kleineren Anstellwinkeln hin. Der daraus resultierende Verformungszustand des Tragflügels wird als Flight-Shape bezeichnet. Der sogenannte Jig-Shape ohne Luftlast, insbesondere die Flügelvorverwindung, wird daher bei Auslegung und Fertigung der Tragflügel so gestaltet, dass sich im Reiseflug eine aerodynamisch günstige spannweitige Auftriebsverteilung einstellt, die mit einem geringen induzierten Widerstand einhergeht. Die Torsionssteifigkeit der Tragflügel muss ferner so groß sein, dass die Wirksamkeit der Querruder im gesamten Flugbereich gewährleistet ist. Tritt der dimensionierende Lastfall eines sogenannten Abfangbogens mit 2,5-facher Erdbeschleunigung auf das Luftfahrzeug (2,5 g Abfangbogen) ein, drehen sich die Flügelspitzen rückwärts gepfeilter linearelastischer Tragflügel zwar zu noch geringeren Anstellwinkeln hin, so dass sich der resultierende Angriffspunkt der spannweitigen Auftriebsverteilung zur Flügelwurzel verlagert und für einen leicht degressiven Anstieg des Flügelwurzelbiegemoments mit dem Gesamtauftrieb sorgt. Dieser wünschenswerte Effekt ist jedoch aufgrund der für die Querruderwirksamkeit erforderlichen Torsionssteifigkeit der Tragflügel und des linearelastischen Verhaltens nur gering ausgeprägt. Zudem verringert er sich mit abnehmender Pfeilung der Tragflügel eines Luftfahrzeugs. Bei Flügeln mit sehr geringer rückwärts gerichteter Pfeilung und großer Streckung ist der Lastabminderungseffekt entsprechend besonders gering. Solche Flügel können für den Verkehrsflugzeugbau in Zukunft wachsende Bedeutung gewinnen, da eine widerstandsarme laminare Tragflügelumströmung bei geringen Pfeilwinkeln einfacher zu erzielen ist als an gepfeilten Flügeln.

Faserverbundwerkstoffe, die aus in eine Matrix eingebetteten Verstärkungsfasern bestehen, sind in der Regel schichtweise aufgebaut. Bei der Auswahl der einzelnen Komponenten für einen Faserverbundwerkstoff ist darauf zu achten, dass die Matrixbruchdehnung größer ist als diejenige der Verstärkungsfasern. In den einzelnen Schichten eines Faserverbundwerkstoffs können sich die Faserorientierungen unterscheiden. Bei den üblichen Faserverbundwerkstoffen ist die Faserrichtung innerhalb einer Schicht jedoch konstant. Neue Faserverbundbauweisen und Herstellungsverfahren erlauben es, die Faserrichtung innerhalb einer Schicht zu variieren, indem die Verstärkungsfasern in Wellenform abgelegt werden. Auf diese Weise wird erreicht, dass die Steifigkeit in der Schicht mit den gewählten Fasern in einer Vorzugsrichtung ortsabhängig ist. Solche Bauweisen bezeichnet man als Variable-Stiffness (VS) Laminate. Bei einer tragenden Struktur aus Variable-Stiffness-Laminaten kann das lokale Deformationsverhalten durch den Aufbau der VS-Laminate vorgegeben werden.

### AUFGABE DER ERFINDUNG

Der Erfindung liegt die Aufgabe zugrunde, einen Tragflügel mit den Merkmalen des Oberbegriffs des Patentanspruchs 1 aufzuzeigen, bei dem die Möglichkeiten des Aeroelastic Tailoring grundsätzlich erweitert sind.

### LÖSUNG

Die Aufgabe der Erfindung wird durch einen Tragflügel mit den Merkmalen des unabhängigen Patentanspruchs 1 gelöst. Bevorzugte Ausführungsformen des neuen Tragflügels sind in den abhängigen Patentansprüchen 2 bis 9 beschrieben. Patentanspruch 10 betrifft ein Luftfahrzeug mit einem Paar von Tragflügeln nach einem der Ansprüche 1 bis 9. Patentanspruch 11 betrifft ein Nurflügel-Luftfahrzeug bestehend aus einem Tragflügel nach einem der Ansprüche 1 bis 9.

### BESCHREIBUNG DER ERFINDUNG

Bei dem neuen Tragflügel weist die tragende Struktur neben Verstärkungsfasern, die immer geradlinig verlaufen, lokal Verstärkungsfasern auf, die ohne Auftriebserzeugung, dass heißt ohne Luftlast einen gewellten Verlauf aufweisen, um die elastische Verformung des Tragflügels bei Auftriebserzeugung in einen ersten Bereich kleiner Gesamtauftriebe und in einen zweiten Bereich großer Gesamtauftriebe zu unterteilen, wobei die gewellten Verstärkungsfasern in dem zweiten Bereich gestreckt sind und dadurch mindestens eine gegenüber dem ersten Bereich zusätzliche Verformungskomponente verursachen. Die bereits verfügbaren Herstellungsverfahren für VS-Laminate werden bei dem neuen Tragflügel erweitert genutzt. In einzelnen Schichten seiner in Faserverbundbauweise ausgebildeten tragenden Struktur werden die Verstärkungsfasern wellenförmig verlegt, so dass sie erst ab einer bestimmten, vorher ausgelegten lokalen Dehnung relevant zur Zugsteifigkeit beitragen. Auf diese Weise wird ein stark nichtlineares lokales Zug-Dehnungsverhalten erreicht. Bei dem neuen Tragflügel werden mit den wellenförmig angeordneten Verstärkungsfasern und einer daraus resultierenden lokal unterschiedlichen Steifigkeitsverteilung in Verbindung mit dem nichtlinearen Zug-Dehnungsverhalten ein Aeroelastic-Tailoring in zweifacher Hinsicht erreicht: Bei moderatem Gesamtauftrieb wird eine aerodynamisch günstige spannweitige Auftriebsverteilung mit geringem induzierten Widerstand erzielt. Bei großem Gesamtauftrieb, z. B. während eines Abfangbogens, verwindet sich der Flügel stark und verlagert den Schwerpunkt der Auftriebsverteilung gegenüber dem Reiseflug massiv in Richtung Flügelwurzel. Auf diese Weise wird durch eine passive Maßnahme ein relativ geringes Wurzelbiegemoment auch bei hohem Gesamtauftrieb gewährleistet. So kann bei entsprechender Auslegung und gleichen zulässigen Materialspannungen bei dem neuen Tragflügel gegenüber konventioneller Bauweise eine Gewichtseinsparung erzielt werden, weil weniger Material im Flügelwurzelbereich verbaut werden muss. Die dazu eingesetzten Maßnahmen sind passiv und weisen damit ein geringes Ausfallrisiko auf. Der neue Tragflügel kann insbesondere auch bei gering oder vorwärts gepfeilten Flügeln eingesetzt werden. Durch das nicht-lineare Verformungsverhalten sind das Aeroelastic-Tailoring für den Reiseflug und den Abfangbogen bei dem neuen Tragflügel in einer bislang unerreichten Weise entkoppelt.

Um die bereits angesprochene Torsion um die Haupterstreckungsrichtung des Tragflügels gezielt in dem zweiten Bereich des Gesamtauftriebs zu erreichen, können die gewellten Verstärkungsfasern beispielsweise in einem stromauf gelegenen druckseitigen Teilbereich der tragenden Flügelstruktur angeordnet sein und dort im Wesentlichen längs der Haupterstreckungsrichtung des Tragflügels verlaufen. Alternativ oder zusätzlich können die gewellten Verstärkungsfasern in einem stromauf gelegenen saugseitigen Teilbereich der tragenden Flügelstruktur im Wesentlichen in Richtung der Profiltiefe des Tragflügels verlaufen. Insbesondere kann die tragende Struktur mit den gewellten Verstärkungsfasern dabei eine Kastenstruktur des Tragflügels sein. Diese Kastenstruktur kann von der Außenhaut des Tragflügels ausgebildet werden, oder es kann sich um einen zusätzlichen Flügelkasten innerhalb der Außenhaut des Tragflügels handeln, an dem die Deckhaut über Spanten und Rippen angestützt ist.

Besondere Vorteile bietet die vorliegende Erfindung, wenn sie bei einem Tragflügel mit sehr geringer Pfeilung und großer Streckung umgesetzt wird.

Ein erfindungsgemäßes Luftfahrzeug weist mindestens ein Paar von Tragflügeln mit den zuvor beschriebenen Merkmalen auf.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden unter Bezugnahme auf die beigefügten Zeichnungen anhand von Ausführungsbeispielen näher erläutert und beschrieben.
- **Fig. 1**: zeigt eine Kastenstruktur eines neuen Tragflügels ohne Luftlast.
- **Fig. 2**: zeigt die Kastenstruktur des Tragflügels gemäß Fig. 1 unter Luftlast im Reiseflug.
- **Fig. 3**: zeigt die Kastenstruktur des Tragflügels gemäß Fig. 1 unter Luftlast bei einem Abfangbogen.
- **Fig. 4**: zeigt Auftragungen der spannweitigen Auftriebsverteilung für den Reiseflug und den Abfangbogen bei einem Tragflügel mit der Kastenstruktur gemäß den Fig. 1 bis 3; und
- **Fig. 5**: zeigt die Flügelverwindung und das Wurzelbiegemoment in Abhängigkeit vom Gesamtauftrieb bei einem Tragflügel mit der Kastenstruktur gemäß den Fig. 1 bis 3, dabei ist der Tragflügel oben in Fig. 3 in drei den Fig. 1 bis 3 entsprechenden Verformungszuständen perspektivische wiedergegeben.

### FIGURENBESCHREIBUNG

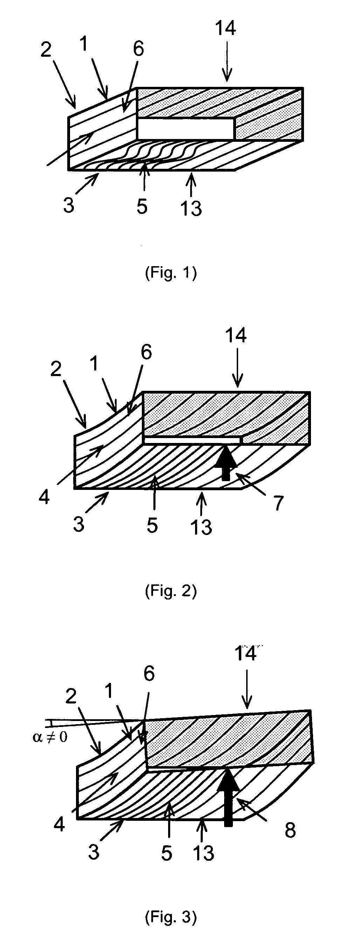

In den **Fig. 1 bis 3** ist eine Kastenstruktur eines erfindungsgemäßen Tragflügels dargestellt, bei der ein nichtlineares Zug-Dehnungsverhalten gezielt angelegt ist und ausgenutzt wird. Die Kastenstruktur 1 als tragende Struktur 2 des hier nicht selbst dargestellten Tragflügels ist in Faserverbundbauweise ausgebildet und weist hier nur schematisch dargestellte Verstärkungsfasern 4 und 5 auf, die in eine Matrix 6 eingebettet sind. Die Verstärkungsfasern 4 sind immer gestreckt und verlaufen in der Haupterstreckungsrichtung des Tragflügels. In einem vorderen unteren Teilbereich 3 der Kastenstruktur 1 sind jedoch Verstärkungsfasern 5 vorgesehen, die ohne Luftlast, d. h. wie in Fig. 1 dargestellt, einen gewellten Verlauf aufweisen und sich nur im Mittel in der Haupterstreckungsrichtung des Tragflügels erstrecken. Dabei können diese gewellten Verstärkungsfasern 5 in dem vorderen unteren Teilbereich 3 zusätzlich zu dort geradlinig verlaufenden Verstärkungsfasern 4 oder statt dieser Verstärkungsfasern 4 vorgesehen sein. Im Falle normaler Luftlast 7, wie sie im Reiseflug gemäß Fig. 2 auftritt, sind die Verstärkungsfasern 5 noch nicht vollständig gestreckt. Durch die Luftlast 7 wird die Kastenstruktur 1 daher im Wesentlichen linearelastisch gegenüber der Flügelwurzel nach oben umgebogen. Beim Auftreten einer großen Luftlast 8 jedoch, wie diese in Fig. 3 dargestellt ist, sind die Verstärkungsfasern 5 gestreckt und führen daher zu einer lokalen Versteifung der Kastenstruktur 1. Diese hat eine Torsion der Kastenstruktur 1 und damit des gesamten Tragflügels um seine Haupterstreckungsrichtung zur Folge, wie sie in Fig. 3 durch einen Verwindungswinkel α ungleich Null angedeutet ist. Ein entsprechender Effekt wird erzielt, wenn die wellenförmig verlaufenden Verstärkungsfasern 5 statt in der auf Zug beanspruchten Unterschale 13 des Tragflügels im Wesentlichen in dessen Haupterstreckungsrichtung in einem vorderen Teilbereich der auf Druck beanspruchten Oberschale 14 des Tragflügels quer zu dessen Haupterstreckungsrichtung bzw. in Spannweitenrichtung angeordnet sind. Dadurch wird die Querdehnung der Oberschale 14 ab einer gewissen Stauchung in der Haupterstreckungsrichtung des Tragflügels behindert. Auch so wird die Kopplung von Biege- und Torsionsverformung der Kastenstruktur im Sinne der Erfindung ab einer bestimmten Fluglast herbeigeführt.

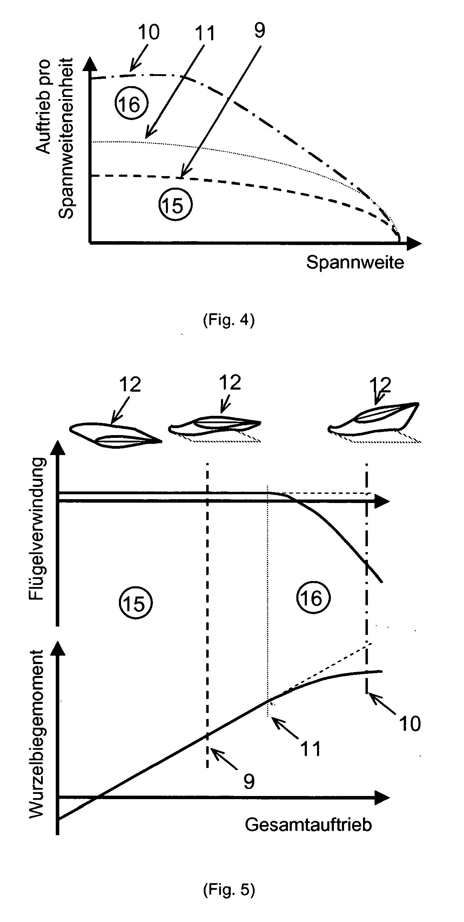

In **Fig. 4** sind spannweitige Auftriebsverteilungen dargestellt, wobei die gestrichelte Linie 9 dem Reiseflug mit der Luftlast 7 und der Verformung des Tragflügels gemäß Fig. 2 entspricht und die strichpunktierte Linie 10 dem in Fig. 3 skizzierten Fall eines 2,5 g Abfangbogens. Die dazwischen verlaufende punktierte Linie 11 skizziert den Punkt, an dem der Bereich 15 kleiner Gesamtauftriebskräfte bzw. Luftlasten auf den Tragflügel endet, über den der Tragflügel ein im Wesentlichen linearelastisches Verformungsverhalten zeigt. An der Linie 11 strecken sind die zunächst gewellten Verstärkungsfasern 5. In einem Bereich 16 oberhalb der Linie 11 verursachen sie die in Fig. 3 skizzierte Torsion des Tragflügels.

In Fig. 5 sind die Flügelverwindung und das Wurzelbiegemoment in Abhängigkeit von dem Gesamtauftrieb für den Tragflügel 12 dargestellt, wobei der Tragflügel 12 selbst in seinen den Fig. 1 bis 3 entsprechenden Verformungszuständen perspektivisch wiedergegeben ist. Die Linien 9, 11 und 10 geben dabei wieder den Fall des Reiseflugs, die Grenze des Bereichs 15 des Gesamtauftriebs mit linearelastischer Verformung des Tragflügels 12 und den Fall eines Abfangbogens mit großem Gesamtauftrieb von beispielsweise 2,5 g mal der Masse des jeweiligen Luftfahrzeugs wieder. Bei dem Abfangbogen tritt eine verstärkte Flügelverwindung auf, die dazu führt, dass das Wurzelbiegemoment um die Flügelwurzel des Tragflügels relativ gesehen abnimmt. Hierdurch wird die Materialbelastung im Bereich der Flügelwurzel reduziert, was dort eine leichtere Bauweise erlaubt.

### BEZUGSZEICHENLISTE

- 1: Kastenstruktur
- 2: tragende Struktur
- 3: Teilbereich
- 4: Verstärkungsfaser
- 5: gewellte Verstärkungsfaser
- 6: Matrix
- 7: Luftlast
- 8: Luftlast
- 9: Linie
- 10: Linie
- 11: Linie
- 12: Tragflügel
- 13: Unterschale
- 14: Oberschale
- 15: Bereich
- 16: Bereich

## Patentansprüche

1. Tragflügel für ein Luftfahrzeug, mit einer in Faserverbundbauweise ausgebildeten tragenden Struktur, wobei sich der Tragflügel bei Auftriebserzeugung elastisch verformt, um seinen Flight-Shape einzunehmen, **dadurch gekennzeichnet, dass** die tragende Struktur (2) neben Verstärkungsfasern (4), die immer geradlinig verlaufen, lokal Verstärkungsfasern (5) aufweist, die ohne Auftriebserzeugung einen gewellten Verlauf aufweisen, um die elastische Verformung des Tragflügels (12) bei Auftriebserzeugung in einen ersten Bereich (15) kleiner Gesamtauftriebe und in einen zweiten Bereich (16) großer Gesamtauftriebe zu unterteilen, wobei die gewellten Verstärkungsfasern (5) in dem zweiten Bereich gestreckt sind und dadurch mindestens eine gegenüber dem ersten Bereich (15) zusätzliche Verformungskomponente verursachen.

2. Tragflügel nach Anspruch 1, **dadurch gekennzeichnet, dass** der erste Bereich (15) den im Reiseflug des Luftfahrzeugs benötigten Gesamtauftrieb und der zweite Bereich (16) den bei einem Abfangbogen auftretenden Gesamtauftrieb umfasst.

3. Tragflügel nach Anspruch 1 oder 2, **dadurch gekennzeichnet, dass** die mindestens eine zusätzliche Verformungskomponente in dem zweiten Bereich (16) des Gesamtauftriebs eine Torsion um die Haupterstreckungsrichtung des Tragflügels (12) ist, die den Schwerpunkt der spannweitigen Auftriebsverteilung über dem Tragflügel (12) zu seiner Flügelwurzel hin verschiebt.

4. Tragflügel nach Anspruch 3, **dadurch gekennzeichnet, dass** die gewellten Verstärkungsfasern (5) in einem stromauf gelegenen druckseitigen Teilbereich (3) der tragenden Struktur im Wesentlichen längs der Haupterstreckungsrichtung des Tragflügels (12) verlaufen.

5. Tragflügel nach Anspruch 3 oder 4, **dadurch gekennzeichnet, dass** die gewellten Verstärkungsfasern (5) in einem stromauf gelegenen saugseitigen Teilbereich (3) der tragenden Struktur im Wesentlichen in Richtung der Profiltiefe des Tragflügels (12) verlaufen.

6. Tragflügel nach einem der Ansprüche 1 bis 5, **dadurch gekennzeichnet, dass** die tragende Struktur (2) mit den gewellten Verstärkungsfasern (5) eine Kastenstruktur (1) des Tragflügels (2) aufweist.

7. Tragflügel nach Anspruch 6, **dadurch gekennzeichnet, dass** die tragende Struktur (2) mit den gewellten Verstärkungsfasern (5) einen Flügelkasten des Tragflügels (12) aufweist.

8. Tragflügel nach einem der Ansprüche 1 bis 7, **dadurch gekennzeichnet, dass** die tragende Struktur (2) mit den gewellten Verstärkungsfasern (5) eine tragende Außenhaut des Tragflügels (12) aufweist.

9. Tragflügel nach einem der Ansprüche 1 bis 8, **dadurch gekennzeichnet, dass** er als Laminarflügel ausgebildet ist.

10. Luftfahrzeug mit einem Paar von Tragflügeln (12) nach einem der Ansprüche 1 bis 9.

11. Nurflügel-Luftfahrzeug bestehend aus einem Tragflügel (12) nach einem der Ansprüche 1 bis 9.

## Claims

1. Wing for an aircraft with a fibre composite load carrying structure, wherein, upon generation of lift, the wing is elastically deformed to take up its flight shape, **characterised in that** the load carrying structure (2), besides reinforcing fibres (4) having a straight run, locally comprises reinforcing fibres (5) which, without generation of lift, have a wavy run to divide the elastic deformation of the wing (12) upon generation of lift in a first range (15) of low overall lifts and in a second range (16) of high overall lifts, wherein the wavy reinforcing fibres (5) are stretched in the second range and thus cause at least one additional deformation component as compared to the first range (15).

2. Wing according to claim 1, **characterised in that** the first range (15) includes the overall lift required in cruise flight of the aircraft, and the second range (16) includes the overall lift occurring during a flare-out.

3. Wing according to claim 1 or 2, **characterised in that** the at least one additional deformation component in the second range (16) of the overall lift is a torsion about the direction of main extension of the wing (12), which shifts the centre of the lift distribution over the wing (12) in span direction towards the wing root.

4. Wing according to claim 3, **characterised in that** the wavy reinforcing fibres (5) run in an upstream pressure-side partial area (3) of the load carrying structure essentially along the direction of main extension of the wing (12).

5. Wing according to claim 3 or 4, **characterised in that** the wavy reinforcing fibres (5) run in an upstream suction-side partial area (3) of the load carrying structure essentially in the direction of the depth of the profile of the wing (12).

6. Wing according to any of the claims 1 to 5, **characterised in that** the load carrying structure (2) with the wavy reinforcing fibres (5) comprises a box structure (1) of the wing (2).

7. Wing according to claim 6, **characterised in that** the load carrying structure (2) with the wavy reinforcing fibres (5) comprises a wing box of the wing (12).

8. Wing according to any of the claims 1 to 7, **characterised in that** the load carrying structure (2) with the wavy reinforcing fibres (5) comprises a load carrying outer skin of the wing (12).

9. Wing according to any of the claims 1 to 8, **characterised in that** it is designed as a laminar wing.

10. Aircraft comprising a pair of wings (12) according to any of the claims 1 to 9.

11. Flying wing aircraft consisting of a wing (12) according to any of the claims 1 to 9.

## Revendications

1. Aile d'un aéronef avec une structure porteuse en matériau composite renforcé de fibres, l'aile subissant une déformation élastique lors de la génération de portance pour pouvoir adopter sa forme de vol, **caractérisée en ce que** la structure porteuse (2) présente localement, en plus des fibres de renforcement (4) qui sont toujours rectilignes, des fibres de renforcement (5) qui présentent, sans génération de portance, une allure ondulée pour subdiviser la déformation élastique de l'aile (12) lors de la génération de portance en une première zone (15) de faible portance totale et une seconde zone (16) de forte portance totale, les fibres de renforcement ondulées (5) étant étendues dans la seconde zone et génèrent ainsi au moins une composante de déformation supplémentaire par rapport à la première zone (15).

2. Aile selon la revendication 1, **caractérisée en ce que** la première zone (15) comprend la portance totale requise lorsque l'aéronef est en vol de croisière et la seconde zone (16) la portance totale apparaissant dans un arrondi.

3. Aile selon la revendication 1 ou 2, **caractérisée en ce que** la ou les composantes de déformation supplémentaires dans la seconde zone (16) de la portance totale est/sont une torsion autour du sens d'extension principal de l'aile (12) qui déplace le point de gravité de la répartition de portance dans le sens de l'envergure, sur l'aile (12), en direction de son emplanture.

4. Aile selon la revendication 3, **caractérisée en ce que** les fibres de renforcement ondulées (5) s'étendent, dans une partie de zone (3) située côté pression et en amont, de la structure porteuse, sensiblement le long du sens d'extension principal de l'aile (12).

5. Aile selon la revendication 3 ou 4, **caractérisée en ce que** les fibres de renforcement ondulées (5) s'étendent, dans une partie de zone (3) située côté aspiration et en amont, de la structure porteuse, sensiblement dans le sens de la profondeur du profil de l'aile (12).

6. Aile selon l'une quelconque des revendications 1 à 5, **caractérisée en ce que** la structure porteuse (2) pourvue des fibres de renforcement ondulées (5) présente une structure en caisson (1) de l'aile (2).

7. Aile selon la revendication 6, **caractérisée en ce que** la structure porteuse (2) pourvue des fibres de renforcement ondulées (5) présente un caisson de l'aile (12).

8. Aile selon l'une quelconque des revendications 1 à 7, **caractérisée en ce que** la structure porteuse (2) pourvue des fibres de renforcement ondulées (5) présente une enveloppe externe porteuse de l'aile (12).

9. Aile selon l'une quelconque des revendications 1 à 8, **caractérisée en ce qu'**elle est réalisée sous la forme d'aile stratifiée.

10. Aéronef pourvu d'une paire d'ailes (12) selon l'une quelconque des revendications 1 à 9.

11. Aile volante composée d'une aile (12) selon l'une quelconque des revendications 1 à 9.
